# FASCICULE DE BREVET EUROPEEN

(11) **EP 1 308 357 B1**
(45) Date de publication et mention de la délivrance du brevet: **01.07.2009**
(21) Numéro de dépôt: 02292578.8
(22) Date de dépôt: 18.10.2002
(51) Int. Cl.: B60T 7/06

(54) **Dispositif de montage d'une pédale dans un véhicule**
Einbauvorrichtung für ein Pedal in einem Fahrzeug
Mounting device for a pedal in a vehicle

(30) Priorité: 24.10.2001 FR 0113751
(43) Date de publication de la demande: 07.05.2003
(73) Titulaire: RENAULT S.A.S., 92100 Boulogne Billancourt (FR)
(72) Inventeur: Mencarelli, Franck, 78180 Montigny Le Bretonneux (FR)

(56) Documents cités:
- DE-A- 10 028 117
- DE-A- 19 501 680
- US-A- 6 112 616

## Description

La présente invention concerne un dispositif de montage d'une pédale, en particulier d'une pédale de frein ou de débrayage, dans un véhicule automobile.

Lorsqu'un véhicule automobile subit un accident par un choc de sa partie avant contre un obstacle, le conducteur, qui en général appuie fortement sur la pédale de frein, subit des lésions physiologiques, notamment dans sa cheville.

Pour éviter ou limiter ces blessures, une solution consiste à provoquer la rupture de pièces de fixation de la pédale de frein ou de débrayage sur le tablier du véhicule.

On connaît par le document EP A 0 965 506, un dispositif de montage d'une pédale de frein montée à rotation par rapport au tablier du véhicule par l'intermédiaire d'un axe transversal en matière tendre, le dispositif comprenant des couteaux venant sectionner l'axe transversal pour libérer la pédale de frein lorsque le tablier s'enfonce vers l'arrière lors d'un choc. Un tel dispositif nécessite l'utilisation pour l'axe transversal d'un matériau suffisamment résistant lors d'une utilisation normale, et pouvant être sectionné lors d'un choc frontal du véhicule. Un tel compromis ne permet pas d'obtenir un effacement sûr de la pédale dans toutes les situations.

Les demandes de brevet DE 100 28 117 et DE 195 01 680 décrivent un dispositif de montage d'une pédale de frein dans un véhicule automobile conventionnel.

La présente invention concerne un dispositif de montage d'une pédale dans un véhicule automobile, permettant d'assurer un effacement de la pédale lors d'un déplacement du tablier du véhicule vers l'arrière, de façon sûre.

L'invention concerne également un dispositif de montage d'une pédale dans un véhicule permettant de libérer la pédale lors d'un déplacement du tablier du véhicule vers l'arrière sans rupture d'un élément de fixation, pour assurer un effacement de la pédale sous un effort faible, inférieur au seuil de blessure physiologique du conducteur lors d'un choc.

L'invention concerne enfin un dispositif de montage d'une pédale dans un véhicule, provoquant un mouvement d'enfoncement de la pédale lors d'un déplacement important du tablier du véhicule vers l'arrière.

Un dispositif de montage d'une pédale de véhicule automobile, selon l'invention, en particulier un dispositif de montage d'une pédale de frein, comprend un support sur lequel est montée la pédale par l'intermédiaire d'un axe de rotation engagé dans des orifices aménagés dans des flasques du support. Des moyens de désengagement de l'axe de rotation et du support par déformation du support coopèrent avec une partie de la structure du véhicule située à l'arrière relativement au support pour libérer la pédale du support en cas de déplacement dudit support par rapport à ladite partie arrière.

La partie arrière fait partie de la structure du véhicule, tout comme le support, mais en cas de choc frontal du véhicule, la partie arrière est prévue pour se déformer moins, ou plus tardivement qu'un tablier où est fixé le support. En cas de choc frontal brutal provoquant une déformation de la structure du véhicule, le support se déplace donc par rapport à la partie arrière.

Selon une caractéristique de l'invention, le dispositif de montage comprend des moyens capables de provoquer l'écartement des flasques du support jusqu'au désengagement des extrémités de l'axe de rotation des orifices des flasques. Une fois l'axe de rotation désengagé des orifices des flasques, la pédale n'est plus fixée sur le support et s'efface sous le pied du conducteur exerçant un effort sur celle-ci.

Dans un mode de réalisation, les flasques du support comprennent des enfoncements en saillie dans un espace compris entre les flasques du support. Les enfoncements permettent de créer une zone de moindre écartement entre les flasques.

Selon une caractéristique de l'invention, le dispositif de montage comprend une pièce d'écartement des flasques disposée entre les flasques. La pièce d'écartement est adaptée pour pouvoir se déplacer entre les flasques, tout en ne passant pas entre les enfoncements lorsque les flasques sont en position normale de fonctionnement.

Selon une autre caractéristique de l'invention, le dispositif de montage comprend des moyens pour déplacer la pièce d'écartement entre les flasques lors d'un déplacement du support par rapport à la partie arrière, le déplacement de la pièce d'écartement entre les enfoncements des flasques provoquant l'écartement des flasques.

Dans un mode de réalisation, la pièce d'écartement est fixée au support par une patte élastique, formant une liaison simple permettant un déplacement de la pièce d'écartement par rapport au support.

Dans un mode de réalisation, la pièce d'écartement comprend des bras destinés à coopérer avec une butée solidaire de la partie arrière en cas de déplacement du support par rapport à la partie arrière.

Avantageusement, la pièce d'écartement est disposée à rotation sur l'axe de rotation.

La présente invention et ses avantages seront mieux compris à l'étude de la description détaillée d'un mode de réalisation pris à titre d'exemple non limitatif et illustrée par les dessins annexés, sur lesquels :
- la figure 1 représente une vue en coupe schématique selon I-I de la figure 2 d'un dispositif de montage d'une pédale selon l'invention ;
- la figure 2 est une vue en coupe sensiblement horizontale d'une partie du dispositif de montage de la figure 1 selon II-II;
- la figure 3 est une vue en coupe sensiblement verticale d'une partie du dispositif de montage de la figure 1 selon III-III;
- la figure 4 est une vue en perspective partielle du dispositif de montage de la figure 1 ;
- la figure 5 est une vue schématique du dispositif de montage selon la figure 1, dans une première position lors d'un choc frontal entraînant une déformation du tablier du véhicule ;
- la figure 6 est une vue schématique d'une seconde position du dispositif selon la figure 1 lors d'un choc frontal, consécutive à une déformation supplémentaire du tablier du véhicule ; et
- la figure 7 est une vue schématique d'une troisième position du dispositif de montage selon la figure 1 lors d'un choc frontal, consécutive à une déformation supplémentaire du tablier du véhicule, par rapport à la position de la figure 6.

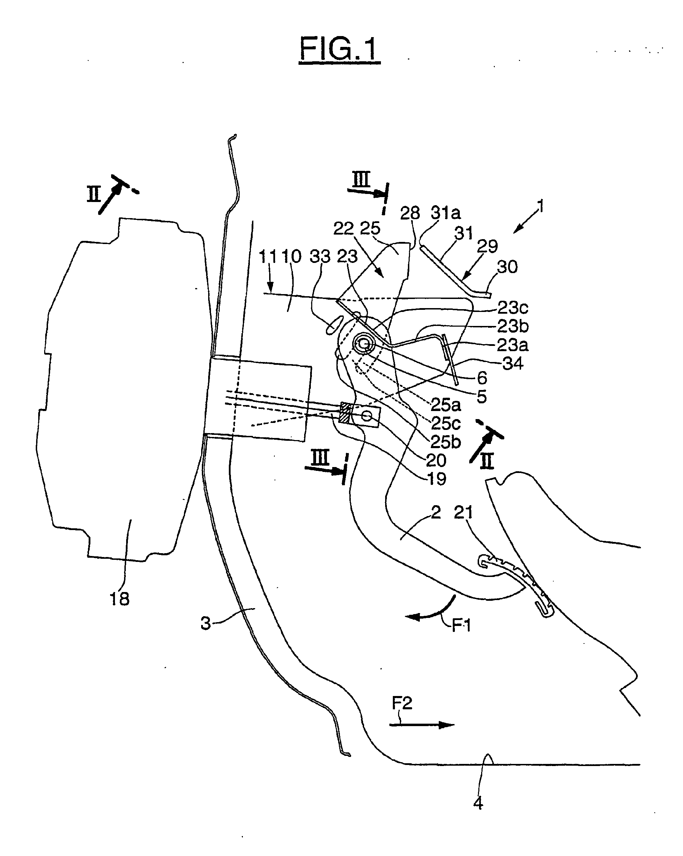

Tel que représenté sur les figures 1 à 4, un dispositif de montage 1 d'une pédale de frein 2 est situé en arrière d'un tablier 3 d'un véhicule automobile possédant un plancher 4.

Dans la description qui suit, le plancher 4 définit un plan dit horizontal, la direction verticale étant définie comme une direction perpendiculaire au plan horizontal. L'avant du véhicule est considéré comme le sens selon lequel se déplace le véhicule en fonctionnement normal, l'arrière étant le sens opposé.

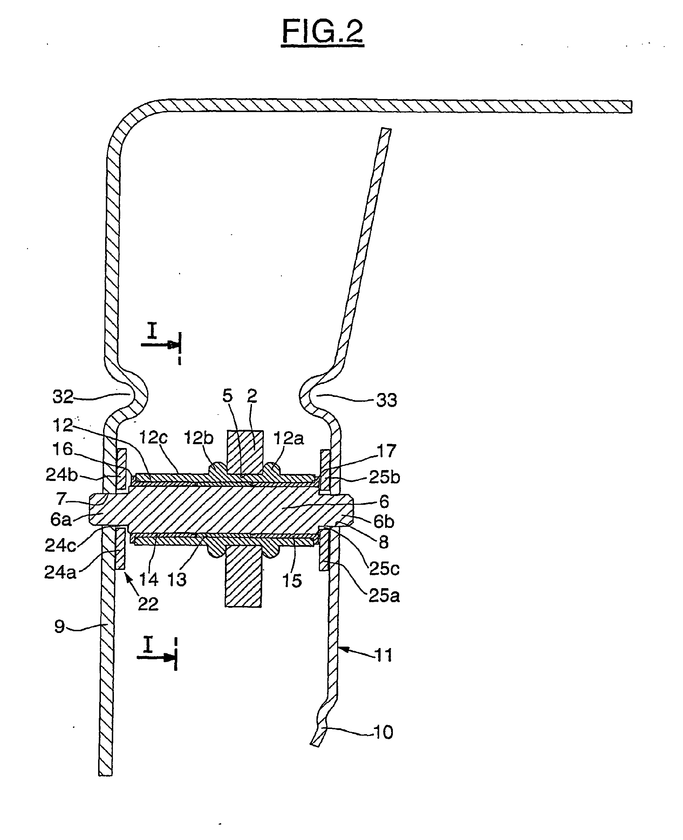

La partie supérieure de la pédale 2 présente un alésage 5 transversal traversé par un axe de rotation 6 (fig. 2) possédant des extrémités de moindre diamètre 6a, 6b en saillie dans des orifices 7, 8 de flasques longitudinaux respectivement 9, 10 d'un support 11 qui s'étend vers l'arrière à partir du tablier 3 en étant fixé sur ce dernier de façon connue, non représentée. Les flasques 9, 10 s'étendent sensiblement parallèlement au plan de la figure 1. La partie inférieure de la pédale de frein 2 comprend un patin d'appui 21 sur lequel le conducteur agit avec le pied.

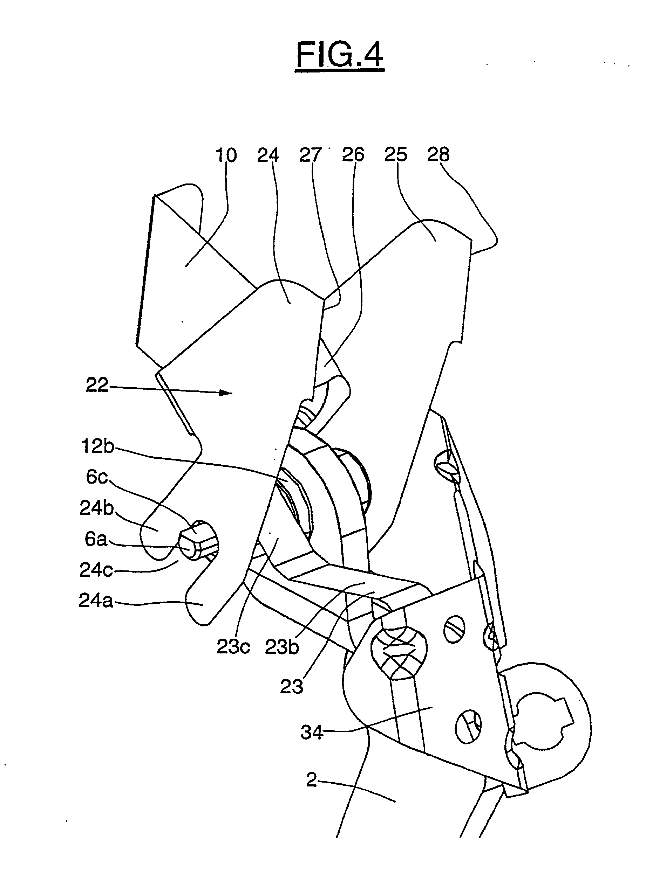

Tel que représenté sur la figure 4, une extrémité 6a peut comprendre un méplat 6c pour immobiliser angulairement l'axe 6 par rapport aux flasques 9, 10.

Comme on le voit sur la figure 2, la pédale de frein 2 est montée sur l'axe de rotation 6 par l'intermédiaire d'un manchon 12 s'étendant axialement de part et d'autre de l'alésage 5 de la pédale de frein 2 et comprenant deux bourrelets annulaires de retenue 12a, 12b s'étendant radialement de part et d'autre de la pédale de frein 2 pour la maintenir axialement. Les bourrelets 12a, 12b sont axialement décalés sur le manchon 12 par rapport à un plan radial de symétrie de l'axe 6, pour laisser libre une portion 12c, de sorte que la pédale de frein 2 est en position décalée sur le manchon 12.

Le manchon 12 est lui-même monté sur l'axe de rotation 6 par l'intermédiaire d'une couronne tubulaire centrale 13 et de deux couronnes tubulaires d'extrémité 14 et 15 situées de part et d'autre de la couronne centrale 13. Les couronnes d'extrémité 14, 15 comprennent à leurs extrémités opposées des collerettes 16, 17 en saillie vers l'extérieur pour retenir axialement le manchon 12.

Sur la figure 1, la pédale de frein 2 est reliée par l'intermédiaire d'un levier articulé 19 à un organe de freinage 18 à commander, situé en avant du tablier 3. La pédale de frein 2 est montée à rotation sur le levier articulé 19 par l'intermédiaire d'un axe 20 perpendiculaire au plan de la figure 1.

Une pièce d'écartement 22 est montée sur le support 11 par l'intermédiaire d'un élément de liaison mécanique sous la forme d'une patte élastique 23 allongée possédant trois portions rectilignes 23a, 23b, 23c reliée entre elles par des portions courbes, et formant sensiblement un Z. La patte 23 possède une épaisseur faible pour lui conférer une certaine souplesse.

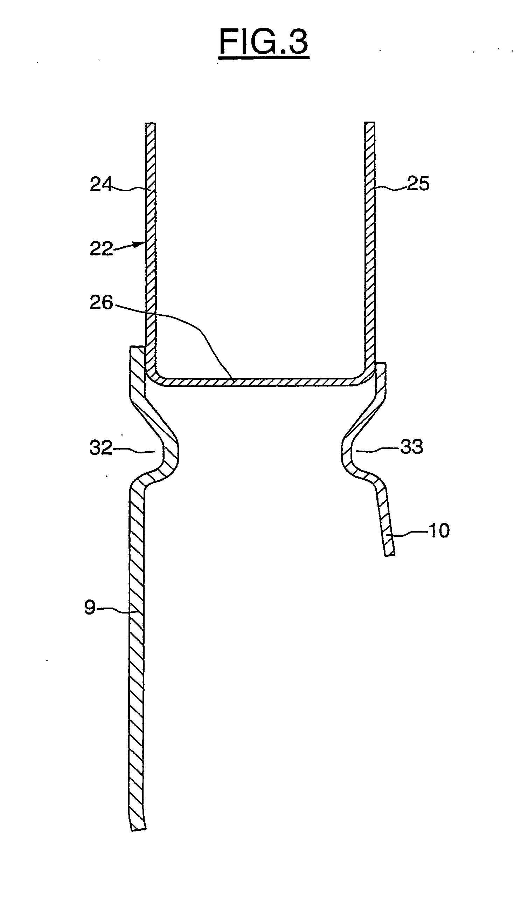

La pièce d'écartement 22 comprend des bras 24, 25 parallèles (fig. 3, 4) s'étendant dans le plan de la figure 1 en étant en contact sensiblement plan avec les flasques 9, 10. Les bras 24, 25 sont reliés par une paroi transversale 26 (fig. 3). Les bras 24, 25 comprennent chacun à leur extrémité supérieure des arêtes d'appui 27, 28 (fig. 1, 4) sensiblement verticales et orientées vers l'arrière. Chaque bras 24, 25 comprend à son extrémité inférieure deux pattes 24a, 24b, 25a, 25b, (fig. 1, 2, 3) en saillie vers le bas et formant entre elles des ouvertures respectivement 24c, 25c.

La portion 23a de la patte 23 est fixée sur une pièce 34 en tôle pliée s'étendant transversalement entre les flasques 9, 10, en étant solidaire des flasques 9, 10. La portion 23c opposée à la portion 23a est fixée sur la paroi transversale 26 de la pièce d'écartement 22. La pièce d'écartement 22 est ainsi fixée sur le support 11 tout en pouvant pivoter dans le plan de la figure 1 et se déplacer sensiblement verticalement par rapport au support 11, par déformation de la patte 23, facilitée par sa souplesse.

La pièce d'écartement 22 est disposée entre les flasques 9, 10. Les extrémités 6a, 6b de l'axe de rotation 6 sont introduites dans les ouvertures 24c, 25c, entre les pattes 24a et 24b, 25a, et 25b disposées sensiblement verticalement. La formation des ouvertures 24c, 25c permet de monter facilement la pièce d'écartement 22 à rotation sur l'axe 6, en introduisant les extrémités 6a, 6b de l'axe 6 dans les ouvertures 24c, 25c, alors que la largeur des ouvertures 24c, 25c ne permet pas le passage d'un portion centrale de l'axe 6. Une première étape de montage permet de monter l'axe 6 dans les flasques 9, 10, l'axe 6 étant retenu axialement par le fait qu'il ne peut traverser les orifices 7, 8. La pièce d'écartement 22 peut être montée lors d'une étape ultérieure.

Une butée 29 (fig. 1) solidaire d'une partie arrière du véhicule non représentée sur les figures, comprend une portion 30 sensiblement horizontale et une portion d'appui oblique 31 s'étendant vers le haut du côté de la pièce d'écartement 22, en étant située en arrière des bras 24, 25. La portion oblique 31 comprend un bord libre 31a opposé à la portion 30, et situé verticalement à hauteur des arêtes 27, 28 de la pièce d'écartement 22.

Les flasques 9, 10 comprennent des enfoncements 32, 33 (fig. 2) situés légèrement en avant de l'axe de rotation 6, et sous la pièce d'écartement 22, et formant une zone de moindre écartement transversal entre les flasques 9 et 10.

En position normale de fonctionnement, la pédale de frein 2 peut pivoter autour de l'axe de rotation 6 dans le sens de la flèche F1 pour provoquer un déplacement du levier articulé 19 vers l'avant en vue de commander l'organe de freinage 18. La rigidité des flasques 9, 10 permet de supporter les efforts s'exerçant dans un plan vertical sur l'axe 6, lors du fonctionnement normal du dispositif de freinage, même lorsque le conducteur appui fortement sur le patin 21.

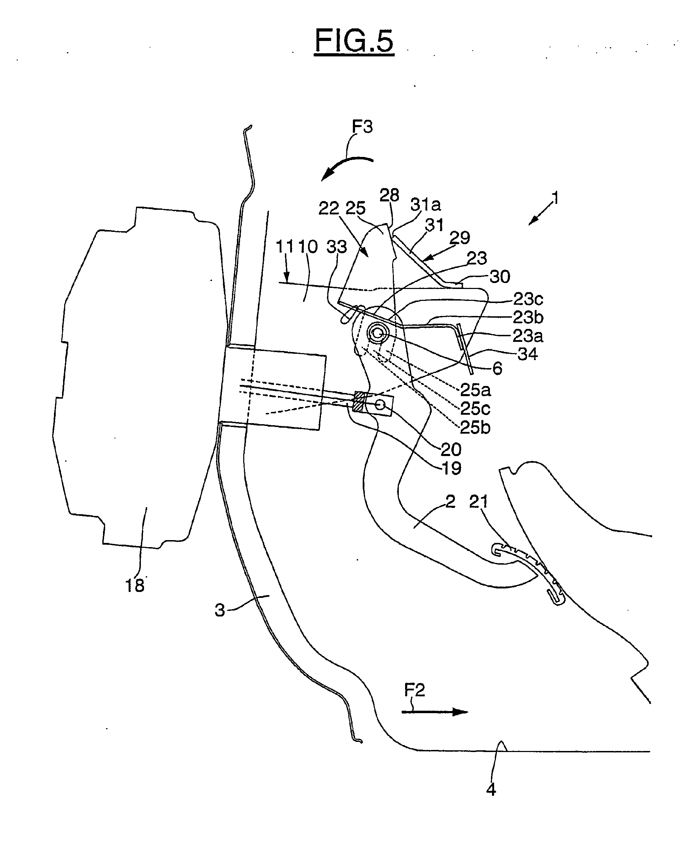

Les figures 5 à 7 illustrent des étapes successives d'un déplacement du tablier 3 vers l'arrière lors d'un choc brutal entraînant une déformation de la structure du véhicule.

Lors d'un choc frontal ou orienté vers l'arrière s'exerçant sur le véhicule, par exemple en cas d'accident, le tablier 3 se déplace vers l'arrière dans le sens de la flèche F2 et entraîne avec lui en arrière le support 11 de la pédale 2. La butée 29 solidaire de la partie arrière ne se déplace pas, ou se déplace plus tardivement que le tablier 3, de sorte que le tablier 3 se rapproche de la butée 29. La pièce d'écartement 22 fixée sur le support 11 se déplace vers l'arrière, et si le déplacement est suffisamment important, les arêtes d'appui 27, 28 des bras 24, 25 viennent en contact sur la portion d'appui 31 de la butée 29.

Sur la figure 5, les arêtes d'appui 27, 28 des bras 24, 25 de la pièce d'écartement 22 sont venues en contact avec le bord libre 31a de la portion d'appui oblique 31. Comme la pièce d'écartement 22 est montée à rotation sur l'axe 6 et fixée par une patte élastique 23 au support 11, le contact avec le bord libre 31a lors d'un déplacement vers l'arrière de la pièce d'écartement 22 provoque la rotation de la pièce d'écartement 22 autour de l'axe de rotation 6 dans le sens de la flèche F3. La rotation de la pièce d'écartement 22 s'accompagne d'une déformation de la patte 23 reliant la pièce d'écartement 22 au support 11, principalement localisée entre les portions 23c et 23b.

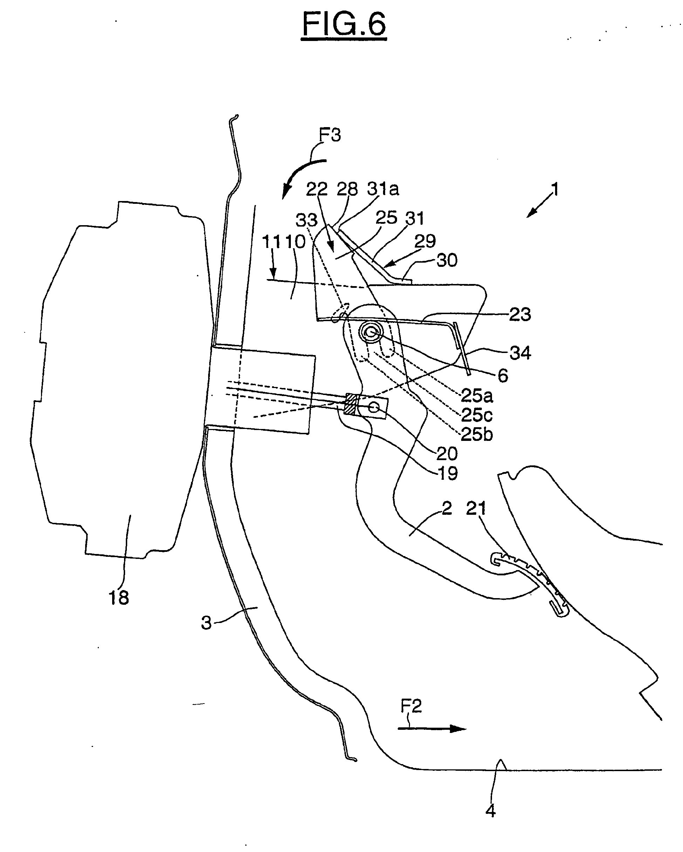

Sur la figure 6, où le déplacement s'est poursuivi vers l'arrière dans le sens de la flèche F2, la pièce d'écartement 22 continue de pivoter autour de l'axe de rotation 6 dans le sens de la flèche F3 de façon que les arêtes d'appui 27, 28 viennent en contact linéique sur la paroi d'appui oblique 31. La déformation de la patte 23 est accentuée.

Lors de sa rotation dans le sens de la flèche F3, la pièce d'écartement 22 coulisse entre les flasques 9, 10 en passant entre les enfoncements 32, 33 formant une zone de moindre largeur transversale. Les flasques 9, 10, de faible épaisseur et s'étendant dans des plans verticaux parallèles au plan de la figure 6, peuvent être déformés facilement dans le sens transversal, perpendiculaire au plan de la figure 6. Le passage de la pièce d'écartement 22 rigidifiée par la paroi transversale 26 entre les enfoncements 32, 33 provoque l'écartement transversal des flasques 9, 10.

L'axe de rotation 6 possédant des extrémités 6a, 6b de moindre diamètre en saillie dans les orifices 7, 8, est maintenu transversalement entre les flasques 9, 10 dans les deux sens, un organe de retenue de l'axe de rotation 6 avec les flasques 9, 10, par exemple un circlips, n'étant pas indispensable.

On peut prévoir des enfoncements 32, 33 de profondeur croissante dans le sens d'un déplacement de la pièce d'écartement 22 entre les enfoncements 32, 33. On forme ainsi une zone de largeur décroissant progressivement. Le passage de la pièce d'écartement 22 provoquera en conséquence un écartement transversal progressif et sûr des flasques 9, 10.

Les enfoncements 32, 33 sont formés de façon que le passage de la pièce d'écartement 22 provoque la déformation des flasques 9, 10, jusqu'à ce que les extrémités 6a, 6b de l'axe de rotation 6 se désengagent des orifices 7, 8, et que la pédale de frein 2 soit libérée. La fixation simple de l'axe 6 n'entrave pas la déformation transversale des flasques 9, 10 qui peut se faire de façon sûre, le désengagement de l'axe 6 par rapport au support 11 se faisant sans rupture de pièce de fixation.

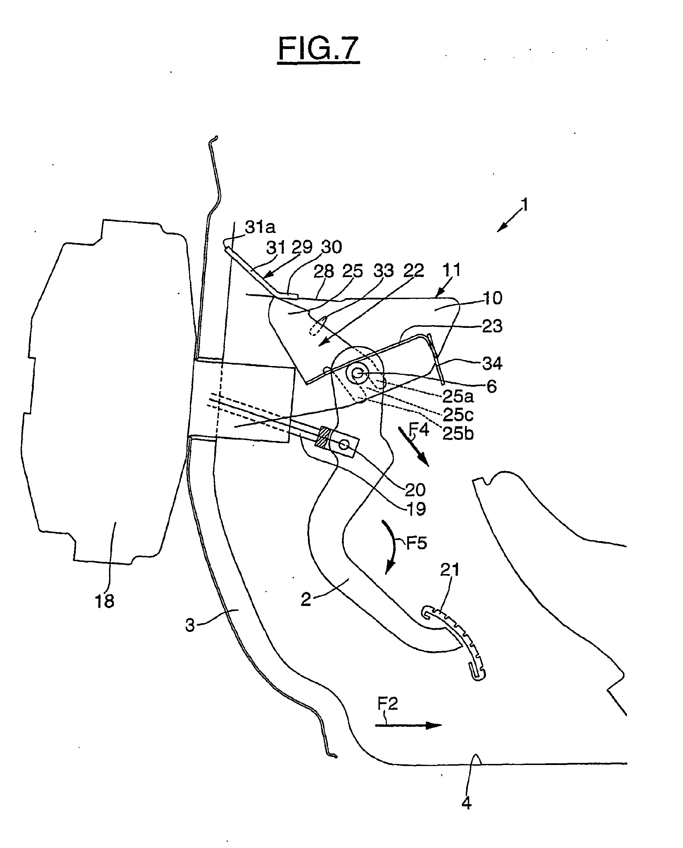

La figure 7 illustre une position de déplacement consécutive à un mouvement supplémentaire du tablier 3 vers l'arrière, dans le sens de la flèche F2. Comme indiqué dans la description ci-dessus, les arêtes 27, 28 sont venues en contact avec la paroi oblique 31. Les arêtes 27, 28 guident alors le mouvement de la pièce d'écartement 22 en glissant sur la paroi oblique 31, et provoquent un déplacement de la pièce d'écartement 22 par rapport à la butée 29 dans le sens de la flèche F4, sensiblement parallèlement à la paroi oblique 31.

La patte 23 autorise le mouvement de la pièce d'écartement 22 par rapport au support 11, tout en maintenant la pièce d'écartement 22 sur le support 11, pour entraîner la pièce d'écartement 22 vers l'arrière avec le support 11. La déformation de la patte 23 s'accentue, notamment entre les portions 23b et 23a. La pièce d'écartement 22 entraîne dans son mouvement l'axe de rotation 6, engagé dans les ouvertures 24c, 25c, et la pédale de frein 2 montée à rotation sur l'axe 6.

Dans cette orientation de la pièce d'écartement 22, où les arêtes 27, 28 sont en appui linéaire sur la paroi 31, les ouvertures 24c, 25c sont orientées dans le sens du déplacement de la pièce d'écartement 22, de façon que le déplacement de la pièce d'écartement 22 tend à provoquer un déplacement de l'axe 6 vers le fond fermé des ouvertures 24c, 25c. La pièce d'écartement 22 entraîne donc l'axe de rotation 6 dans son mouvement de translation, dans le sens de la flèche F4.

La pédale de frein 2 est toujours liée au levier articulé 19 par l'intermédiaire de l'axe 20. Dans son déplacement, la pièce d'écartement 22, agissant sur l'axe 6, crée un moment tendant à faire pivoter la pédale de frein 2 autour de l'axe 20 selon le sens indiqué par la flèche F5, de façon que le patin 21 se rabat vers le plancher 4 en s'éloignant du pied du conducteur.

Lors d'un déplacement du tablier 3 d'une position selon la figure 1 à une position selon la figure 7, en passant par les positions illustrées par les figures 5 et 6, le support 11 se déplace vers l'arrière en entraînant la pièce d'écartement 22. Les arêtes 27, 28 viennent en contact avec le bord libre 31a de la paroi oblique 31 en provoquant la rotation de la pièce d'écartement 22 de façon que les arêtes 27, 28 viennent en contact sur la paroi oblique 31. Lors de sa rotation, la pièce d'écartement 22 coulisse entre les enfoncements 32, 33 en écartant les flasques 9, 10, ce qui provoque la libération de l'axe 6. Lorsque les arêtes 27, 28 sont en contact avec la paroi 31, l'axe 6 est libéré. La pièce d'écartement 22 est entraînée vers l'arrière par le support 11, et les arêtes 27, 28 guident le mouvement de la pièce d'écartement 22 vers le bas, en entraînant l'axe 6, ce qui provoque la rotation de la pédale de frein 2 dans le sens d'un effacement du patin 21.

Lors d'un choc frontal du véhicule avec un obstacle, le dispositif de fixation de la pédale 2 provoque ainsi successivement la libération de la pédale 2 et l'effacement de la pédale 2. La rotation de la pièce d'écartement 22 provoque d'abord la libération de la pédale 2 de façon sûre, puis le déplacement de la pièce d'écartement 22 guidée par la butée 29 provoque l'effacement de la pédale 2. La rigidité transversale des flasques 9, 10 autorise la libération de la pédale de frein 2 par une déformation avec un effort relativement faible assurant un effacement certain de la pédale de frein 2, sans rupture d'une pièce de fixation.

Grâce à l'invention, la pédale de frein peut être désolidarisée du support lorsque le tablier se déplace vers l'arrière, afin de libérer la pédale de frein pour éviter une éventuelle lésion physiologique de la cheville du conducteur, sans rupture d'une pièce de fixation. La pièce d'écartement permet de libérer la pédale de frein en exerçant un effort faible, assurant un effacement certain de la pédale de frein en cas de choc frontal. Le dispositif de montage de la pédale de frein s'avère en outre simple, et utilise un nombre limité de pièces, pouvant être assemblées de façon simple.

## Revendications

1. Dispositif de montage d'une pédale de véhicule automobile, en particulier d'une pédale de frein, comprenant un support (11) sur lequel est montée la pédale (2) par l'intermédiaire d'un axe de rotation (6) engagé dans des orifices (7, 8) aménagés dans des flasques (9, 10) du support (11), des moyens de désengagement de l'axe de rotation (6) et du support (11) par déformation du support (11) coopérant avec une partie de la structure du véhicule située à l'arrière relativement au support (11) pour libérer la pédale du support (11) en cas de déplacement dudit support (11) par rapport à ladite partie arrière, et des moyens capables de provoquer l'écartement des flasques (9, 10) du support jusqu'au désengagement des extrémités (6a, 6b) de l'axe de rotation (6) des orifices (7, 8) des flasques (9, 10), **caractérisé par le fait qu'**il comprend une pièce d'écartement (22) des flasques (9, 10) disposée entre les flasques (9, 10).

2. Dispositif selon la revendication 1, **caractérisé par le fait que** les flasques (9, 10), du support comprennent des enfoncements (32, 33) en saillie dans un espace compris entre les flasques (9, 10).

3. Dispositif selon la revendication 2, **caractérisé par le fait que** les enfoncements (32, 33) forment une zone de moindre écartement entre les flasques (9, 10).

4. Dispositif selon l'une des revendications 1 à 3, **caractérisé par le fait qu'**il comprend des moyens pour déplacer la pièce d'écartement (22) entre les flasques (9, 10) lors d'un déplacement du support (9) par rapport à la partie arrière, de sorte que la pièce d'écartement (22) passe entre les enfoncements (32, 33).

5. Dispositif selon l'une quelconque des revendications 1 à 4, **caractérisé par le fait que** la pièce d'écartement (20) est fixée au support (11) par une patte élastique (23).

6. Dispositif selon l'une quelconque des revendications 1 à 5, **caractérisé par le fait que** la pièce d'écartement (22) comprend des bras (24, 25) destinés à coopérer avec une butée (29) solidaire de la partie arrière en cas de déplacement du support (11) par rapport à la partie arrière.

7. Dispositif selon l'une quelconque des revendications 1 à 6, **caractérisé par le fait que** la pièce d'écartement (22) est disposée à rotation sur l'axe de rotation (6).

## Claims

1. Mounting for a motor vehicle pedal, particularly a brake pedal, comprising a bracket (11) on which the pedal (2) is mounted via a pivot pin (6) engaged in holes (7, 8) in side plates (9, 10) of the bracket (11), means for disengaging the pivot pin (6) and the bracket (11) by deforming the bracket (11) that are acted upon by a portion of the structure of the vehicle situated to the rear of the bracket (11) in order to free the pedal from the bracket (11) in the event of movement of said bracket (11) relative to said rear portion, and means capable of increasing the separation between the side plates (9, 10) of the bracket until the ends (6a, 6b) of the pivot pin (6) have become disengaged from the holes (7, 8) of the side plates (9, 10), said mounting being **characterized in that** it comprises a side-plate (9, 10) separation-increasing part (22) between the side plates (9, 10).

2. Mounting according to Claim 1, **characterized in that** the side plates (9, 10) of the bracket comprise indentations (32, 33) projecting into a space between the side plates (9, 10).

3. Mounting according to Claim 2, **characterized in that** the indentations (32, 33) form a zone of reduced spacing between the side plates (9, 10).

4. Mounting according to one of Claims 1 to 3, **characterized in that** it comprises means for moving the side-plate (9, 10) separation-increasing part (22) when there is movement of the bracket (11) relative to the rear portion, such that the separation-increasing part (22) passes between the indentations (32, 33).

5. Mounting according to any one of Claims 1 to 4, **characterized in that** the separation-increasing part (22) is attached to the bracket (11) by a spring strip (23).

6. Mounting according to any one of Claims 1 to 5, **characterized in that** the separation-increasing part (22) comprises arms (24, 25) designed to be acted upon by a stop (29) integral with the rear portion in the event of movement of the bracket (11) relative to the rear portion.

7. Mounting according to any one of Claims 1 to 6, **characterized in that** the separation-increasing part (22) is mounted rotationally on the pivot pin (6).

## Patentansprüche

1. Vorrichtung zum Einbau eines Kraftfahrzeugpedals, insbesondere eines Bremspedals, mit einem Träger (11), an dem das Pedal (2) durch eine Drehachse (6) angebracht ist, die in in Flanschen (9, 10) des Trägers (11) ausgebildeten Öffnungen (7, 8) eingreift, Mitteln zum Außereingriffbringen der Drehachse (6) und des Trägers (11) durch Verformung des Trägers (11), die mit einem Teil der Fahrzeugstruktur zusammenwirken, der sich bezüglich des Trägers (11) am hinteren Teil befindet, um das Pedal im Falle einer Verschiebung des Trägers (11) bezüglich des hinteren Teils von dem Träger (11) freizugeben, und Mitteln, die das Entfernen der Flansche (9, 10) von dem Träger bis zum Außereingriffbringen der Enden (6a, 6b) der Drehachse (6) aus den Öffnungen (7, 8) der Flansche (9, 10) bewirken können, **dadurch gekennzeichnet, dass** sie ein zwischen den Flanschen (9, 10) angeordnetes Teil (22) zum Auseinanderspreizen der Flansche (9, 10) umfasst.

2. Vorrichtung nach Anspruch 1, **dadurch gekennzeichnet, dass** die Flansche (9, 10) des Trägers in einen sich zwischen den Flanschen (9, 10) befindenden Raum vorstehende Einbuchtungen (32, 33) aufweisen.

3. Vorrichtung nach Anspruch 2, **dadurch gekennzeichnet, dass** die Einbuchtungen (32, 33) einen Bereich mit geringerem Abstand zwischen den Flanschen (9, 10) bilden.

4. Vorrichtung nach einem der Ansprüche 1 bis 3, **dadurch gekennzeichnet, dass** sie Mittel zum Verschieben des Spreizteils (22) zwischen den Flanschen (9, 10) bei einer Verschiebung des Trägers (11) bezüglich des hinteren Teils, so dass das Spreizteil (22) zwischen den Einbuchtungen (32, 33) passiert, aufweist.

5. Vorrichtung nach einem der Ansprüche 1 bis 4, **dadurch gekennzeichnet, dass** das Spreizteil (22) durch einen elastischen Ansatz (23) am Träger (11) befestigt ist.

6. Vorrichtung nach einem der Ansprüche 1 bis 5, **dadurch gekennzeichnet, dass** das Spreizteil (22) Arme (24, 25) umfasst, die im Falle einer Verschiebung des Trägers (11) bezüglich des hinteren Teils mit einem fest mit dem hinteren Teil verbundenen Anschlag (29) zusammenwirken sollen.

7. Vorrichtung nach einem der Ansprüche 1 bis 6, **dadurch gekennzeichnet, dass** das Spreizteil (22) drehbar auf der Drehachse (6) angeordnet ist.
